# EUROPÄISCHE PATENTSCHRIFT

(11) **EP 4 115 095 B1**
(45) Veröffentlichungstag und Bekanntmachung des Hinweises auf die Patenterteilung: **01.07.2026**
(21) Anmeldenummer: 21709891.2
(22) Anmeldetag: 01.03.2021
(51) Int. Cl.: F16F 7/116, F03D 13/20, F03D 80/00

(54) **FREQUENZADAPTIVER BLATTFEDER-SCHWINGUNGSTILGER**
FREQUENCY-ADAPTIVE LEAF-SPRING TUNED MASS DAMPER
AMORTISSEUR À MASSE ACCORDÉE À RESSORT À LAME ET À ADAPTATION DE LA FRÉQUENCE

(30) Priorität: 03.03.2020 EP 20000093
(43) Veröffentlichungstag der Anmeldung: 11.01.2023
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2021/025079
(87) Internationale Veröffentlichungsnummer: WO 2021/175491

(56) Entgegenhaltungen:
- EP-A1- 3 519 644
- WO-A1-2017/186343
- DE-U1- 202011 000 635
- DE-U1- 202012 105 031
- JP-A- S 622 033

## Beschreibung

Die Erfindung betrifft einen Schwingungstilger bzw. Schwingungsdämpfer, der mit Hilfe einer Anordnung aus mehreren gestapelten, besonders geformten bzw. verbogenen Blattfedern über einen bestimmten Bereich an die einwirkenden Störfrequenzen eines zu dämpfenden Bauteils bzw. des zu dämpfenden Schwingungssystem angepasst werden kann, wobei die Position der Tilgermasse im Wesentlichen nur geringfügig verändert wird. Die Erfindung betrifft insbesondere ein- und zweidimensional wirksame Schwingungstilger.

Die erfindungsgemäßen Schwingungstilger sind insbesondere für Anlagen, Fahrzeuge und Maschinen geeignet, welche häufige Drehzahländerungen unterworfen sind, wodurch häufig Störfrequenzen erzeugt werden, die sich insbesondere durch Auftreten von Körperschall oder andere Schwingungen bemerkbar machen.

Schwingungstilger zur Reduzierung von unerwünschten Schwingungen in Maschinen, Anlagen oder deren Bauteile sind generell im Stand der Technik bekannt. Hierfür wurden zahlreiche Lösungen vorgeschlagen. Die meisten dieser Lösungen sind mit einer gewünschten relativ starken passiven Dämpfung des angeregten Systems verbunden, so wie beispielsweise in der EP 1 008 747, der EP 1 327 726 oder der EP 2 816 177 beschrieben. Der wesentliche Funktionsteil dieser Systeme besteht dabei aus einem Elastomer, das selbst eine Dämpfung aufweist. Vorteil dieser Systeme ist, dass die entsprechenden Tilger über einen breiten Frequenzbereich inklusive der vorkommenden Eigenfrequenzen eingesetzt werden können, so dass diese keine größeren Störungen der Anlage verursachen. Diese System arbeiten jedoch nur dann effizient, wenn die Drehzahlen der rotierenden Teile sich nicht oder nicht wesentlich ändern. Rotierende Systeme mit variierender Drehzahl neigen jedoch unter anderem zu vermehrtem bzw. verstärktem Körperschall, der insbesondere bei Windkraftanlagen unerwünscht ist.

In der WO 2017/186343 A1 wird ein Blattfedertilger beschrieben, der in einer ausgewählten Richtung wirksam ist. Dabei ist auf der ersten flachen Seite einer Blattfeder ein Vorspannelement angeordnet, welches mit der Tilgermasse verbunden ist, und auf der zweiten flachen Seite der Blattfeder ist eine Rolleneinheit angebracht, welche zwischen der Blattfeder und einer Fläche der Tilgermasse angeordnet ist, und entlang der Blattfeder hin- und herbewegt werden und durch das Vorspannelement an eine bestimmte ausgewählte und variable Position entlang der der Blattfeder fixiert werden kann. Damit wird die schwingungstechnisch wirksam Länge der Blattfeder und somit auch die Frequenz der senkrecht dazu schwingenden und durch diese Frequenz zu dämpfende Maschineneinheit festgelegt. Dieser eindimensional wirksame Tilger arbeitet zwar sehr effektiv, ist aber wegen der mechanisch bewegten Teile auf bzw. an der Blattfeder oft schwierig einzustellen und muss relativ häufig nachjustiert werden.

Ein weiterer adaptiver Blattfeder-Schwingungstilger ist aus der DE 20 2012 105031 U1 bekannt.

Es bestand somit die Aufgabe einen Blattfeder-Schwingungstilger zur Verfügung zu stellen, welcher in analoger Weise eine optimale Dämpfung über einen weiten Frequenzbereich, z.B. durch frequenzabhängige Krafteinleitung bei sich verändernden Drehzahlen der im System beteiligten rotierenden Bauteile erfährt, jedoch nicht den Nachteil einer schwierigen oder häufigen Nachjustierung der Vorrichtung an eingetretene Frequenzänderungen aufweist.

Die gestellte Aufgabe wurde durch den im Folgenden beschriebenen und in den Ansprüchen charakterisierten Schwingungstilger gelöst.

Gegenstand der Erfindung ist somit ein Schwingungstilger zur Dämpfung von Schwingungen insbesondere im Bereich zwischen 50 und 500 Hz in Fahrzeugen, Maschinen und Anlagen, insbesondere Windkraftanlagen, welcher im Wesentlichen umfasst:
(i) eine regelmäßig oder unregelmäßig geformte Schwingungsmasse (1) aus einer oder mehreren Einheiten,
(ii) eine oder mehrere Blattfederanordnungen (2), bestehend im Wesentlichen aus mindestens einer, vorzugsweise aber aus zwei oder mehreren, insbesondere drei, vier, fünf, sechs oder mehr, einzelnen, übereinadergestapelten Blattfedern (2.1) von vorgegebener Steifigkeit, sowie
(iii) eine Vorrichtung, insbesondere eine Verschiebevorrichtung (5),(6),(14)-(18),oder eine elektrische oder thermische Einrichtung mit dieser Funktion, wie z.B. ein Piezo-Element oder ein Bimetall-Element, zur Veränderung der vorgegebenen Steifigkeit der Blattfederanordnung (2) und damit zur Frequenzanpassung des betreffenden Schwingungssystem an die auftretenden Störfrequenzen, welche sowohl mit der Blattfederanordnung (2) als auch mit der Trägervorrichtung (11) des Schwingungssystem in Verbindung steht,
wobei die Blattfederanordnung in besonderer Weise gestaltet und angeordnet ist, und sowohl mit einer Trägereinheit (11) des Schwingungssystems (Anlage, Maschine, Fahrzeug) als auch mit der Tilgermasse (1) in der Weise verbunden ist, dass im angeregten Zustand bei Kraftfluss in einer bestimmten Richtung keine mechanisch bewegten Teile beteiligt sind. Somit bedarf es bei der erfindungsgemäßen Tilgervorrichtung nur geringer Wartung bei nur geringem Verschleiß, im Gegensatz zu der Lösung der WO 2017/186343 A1, welche einen Tilger mit einer Blattfeder offenbart, die während des Betriebes in ihrer Länge durch eine Verschiebvorrichtung verkürzt oder verlängert werden kann.

Die Blattfederanordnung (2) des erfindungsgemäßen Schwingungstilgers weist dabei folgende besondere Merkmale auf:
(a) eine, vorzugsweise zwei oder mehrere parallel gestapelte, bzw. übereinanderliegende, sich direkt berührenden oder sich nicht direkt berührenden Blattfedern (2.1), welche um ihre Querachse im kräftefreien Zustand vorgebogen sind, wobei die Längsachse der Blattfedern, bzw. der Blattfederanordnung definiert ist durch die Richtung (2.1.3) der während des Betriebs erfolgten Krafteinwirkung, wobei die Verbiegung der Blattfederanordnung (2), bzw. der Blattfedern (2.1) S-förmig, vorzugsweise mittig symmetrisch S-förmig ist, und
(b) zwei in Längsrichtung befindliche Endbereiche (2.1.1), über welche sie verspannt werden, und die zueinander parallel angeordnet, aber bezüglich ihrer Position in Bezug auf die Längsachse um einen definierten voreingestellten Betrag (2.1.2) ausgelenkt oder gegeneinander versetzt sind, wobei diese vorgegebene Auslenkung (Ausgangsauslenkung) einer bestimmten Steifigkeit der Blattfederanordnung und damit einer bestimmten Frequenz des mit der Blattfederanordnung verbundenen Schwingungssystems entspricht. Der eine Endbereich ist direkt oder indirekt mit der Tilgermasse (1) verbunden, welche so angeordnet ist, dass sie in Richtung der Längsachse der Blattfederanordnung schwingen kann. Der andere Endbereich (2.1.) der Blattfederanordnung (2) ist erfindungsgemäß mit der genannten Vorrichtung zur Veränderung der Steifigkeit der Blattfederanordnungen (2) verbunden, welche auf der Trägervorrichtung (11) angeordnet und dort bedienbar ist.

Je nach Ausführungsform kann die Auslenkung der Blattfederanordnung (2) mittels der genannten Vorrichtung unterschiedlich erfolgen, beispielsweise durch eine Verschiebe- oder Drehvorrichtung (5)(6)(14-18), oder eine gleichwirkende Einrichtung.

Eine Verschiebe- oder Drehvorrichtung (5)(6), die in Verbindung mit der Schwingungsmasse (1) steht, bewirkt bei Verschieben oder Verdrehen der Masse gegenüber der Trägereinheit (11) des Schwingungssystems eine Verbiegung der Blattfederanordnung (2), bzw. des Pakets aus Blattfedern (2.1) in senkrechte Richtung zur deren Längsachse ((2.1.6, Auslenkrichtung) bzw. in Richtung der Verschiebung (8) oder Verdrehung (19). Dies wiederum führt, je nach Verschieberichtung oder Drehrichtung zu einer Vergrößerung oder Verkleinerung des Wertes der voreingestellten Auslenkung (2.1.2). Hierdurch kann die vorgegebene Steifigkeit der Blattfederanordnung entlang ihrer Längsachse verändert und damit die Frequenz des Schwingungssystems an eine veränderte Störfrequenz angepasst werden. Durch eine entsprechende positive oder negative Verbiegung der Blattfederanordnung (entsprechend einer positiven oder negativen Verschiebung oder Verdrehung) kann so eine entsprechende Anpassung der Frequenz des Tilgers an eine variierende Drehzahl der Maschine, der Anlage oder des Fahrzeuges und damit an die sich entsprechend ändernde Störfrequenz erreicht werden. Die Frequenzeinstellung erfolgt somit erfindungsgemäß über die reine Verbiegung der Blattfederanordnung (2) durch die Verschiebevorrichtung (5)(6) oder die Drehvorrichtung (14-18).

Das Verbiegen bzw. Auslenken der Blattfederanordnung kann, wie erwähnt, auch durch ein Piezo-Element erfolgen, welches einseitig oder beidseitig auf der Blattfederanordnung angebracht ist. Beim Anlegen einer Hochspannung dehnen sich die angeregten PiezoElemente aus, wodurch eine entsprechende Verbiegung der Blattfederanordnungen erfolgt. Durch eine entsprechend gerichtete beidseitige Anregung der Piezoelemente kann eine Verdopplung des Einstellbereiches erreicht werden.

Alternativ können die Blattfedern (2) aus zwei Metallen mit unterschiedlicher Wärmeausdehnung (Bimetall-Element) zusammengesetzt sein. Bei Einwirken einer Temperatur - passiv durch die Umgebungstemperatur oder aktiv mittels Heizelementen - verbiegen sich die Blattfedern entsprechend, so dass dadurch Einfluss auf deren Steifigkeit und somit auf die Frequenz des Schwingungssystems genommen werden kann.

Die Blattfederanordnung besteht üblicherweise aus einer dickeren oder vorzugsweise mehreren dünnen (1 - 2mm) Blattfedern, die deckungsgleich übereinandergestapelt sind. Die einzelnen Blattfedern sind in der Regel durch einen schmalen Abstand (≤ 2mm, insbesondere ≤ 1mm) voneinander getrennt, weisen also spaltförmige Zwischenräume auf, können aber auch direkt aufeinander liegen. Im letzteren Fall wird durch die bei Verbiegung auftretende Reibung eine zusätzliche Dämpfung des Systems generiert.

In einer Ausführungsform der Erfindung können die Zwischenräume zwischen den Blattfedern einer Blattfederanordnung auch ausgefüllt sein mit elastischen Schichten, die in der Lage sein müssen, die bei Verbiegung der Blattfedern auftretenden zum Teil erheblichen Scherkräfte schadlos aufzunehmen. In einer anderen Ausführungsform der Erfindung können einzelne oder alle Blattfedern der Blattfederanordnung zur Beeinflussung und Optimierung der angestrebten Steifigkeit sowie zur Reduzierung der Masse zur Erhöhung der Eigenfrequenz der Blattfeder mittige Aussparungen in runder oder ovaler Form aufweisen (2.1.4). Umgekehrt kann auch eine Masse an den Blattfedern angebracht werden um deren Eigenfrequenzen zu reduzieren.

Die Blattfederanordnungen bzw. die einzelnen Blattfedern für die erfindungsgemäßen Schwingungstilger sind vorzugsweise rechteckig, wobei die im Umriss rechteckige Grundfläche natürlich, wie beschrieben, eine S-förmige Verbiegung, vorzugsweise mittig und symmetrisch entlang der Längsachse, aufweist. Die Blattfedern können jedoch auch Umrisse beliebiger von regelmäßiger oder unregelmäßiger Form und Größe haben, je nach Funktion, Platzbedarf und Anordnung in einer bestimmten Maschine oder Anlage.

Es hat sich herausgestellt, dass Schwingungstilger mit einer Blattfederanordnung, bzw. Blattfedern, welche im vorgebogenen kräftefreien Zustand eine Auslenkung (Ausgangsauslenkung) gegenüber der Längsachse (2.1.2) von 10 - 40%, vorzugsweise von 15-30%, der freien Federlänge (2.1.5) in Richtung der Längsachse bzw. in Belastungsrichtung (2.1.3) der Blattfedern aufweisen, besonders effektiv Störfrequenzen zwischen 50 und 500 Hz, vorzugsweise zwischen 100 und 300 Hz zu dämpfen vermögen. Für übliche Windkraftanlagen können zum Beispiel so Blattfederanordnungen mit einer freien Federlänge (2.1.5) von 50 - 500 mm, vorzugsweise 100 von 300 mm, je nach Größe der Anlage eingesetzt werden.

Üblicherweise kommen in den erfindungsgemäßen Schwingungstilgern zwei oder mehrere Blattfederanordnungen (2) zum Einsatz je nach gewünschter Dämpfung. Es ist aber prinzipiell möglich, einen funktionsfähigen erfindungsgemäßen Schwingungstilger mit nur einer Blattfederanordnung auszurüsten. Vorzugsweise kommen jedoch mindestens zwei Blattfederanordnungen pro Tilger zum Einsatz. Dabei hängt es auch davon ab, ob der Tilger in nur einer Richtung (Lineartilger) oder auch in einer Ebene wirksam sein soll.

Gegenstand der Erfindung ist somit ein adaptiver eindimensional wirksamer Schwingungstilger, der mindestens zwei parallel angeordnete Blattfederanordnungen (2) aufweist, welche jeweils über ihren ersten End- oder Einspannbereich (2.1.1) mit der Schwingungsmasse (1) an gegenüberliegenden Punkten und über ihren zweiten End- oder Einspannbereich (2.1.1) mit der Trägereinheit (11) fest verbunden sind.

Die Schwingungsmasse (1) wird dabei von einer oder mehreren zusammengepackten Platten zwischen den Blattfederanordnungen gebildet wird, und ist so angeordnet,, dass sie im Wesentlichen nur in einer bestimmten festzulegenden Richtung (9), beispielsweise in vertikaler Richtung, schwingen kann.

Die Vorrichtung zur Veränderung der vorgegebenen Steifigkeit der Blattfederanordnung (2) ist in einer bevorzugten Ausführungsform eine mechanische, hydraulische, pneumatische oder elektrische Verschiebevorrichtung (5)/6), welche einerseits mit der Trägereinheit (11) andrerseits mit der Schwingungsmasse (1) verbunden ist, wobei die mit der Blattfederanordnung verbundene Schwingungsmasse (1) in einer Richtung (8) (Verschiebungsrichtung) senkrecht zur Schwingungsrichtung (9) hin und her verschoben werden kann. Ist also beispielsweise die Schwingungsrichtung der Masse (1) vertikal, so ist die Verschiebungsrichtung horizontal. Durch eine solche Verschiebung kann die vorgegebene ursprüngliche Auslenkung (2.1.2) der vorgebogenen Blattfedern durch reversible Verformung in die Verbiegungsrichtung (2.1.6) vergrößert oder verkleinert werden, und damit Einfluss auf die Steifigkeit der Blattfederanordnung genommen werden.

Die Masse (1) wird, wie gesagt, in Richtung (8) verschoben Damit die Schwingungsmasse (1) eines solchen eindimensionalen Tilgers bei Verbiegung der Blattfedern mittels der Verschiebevorrichtung (5)(6) sich nicht verkantet und gegenüber der Trägervorrichtung (11) und den mindestens zwei Blattfederanordnungen in gleicher Weise ausgerichtet bleibt, ist es erfindungsgemäß vorgesehen, an der Schwingungsmasse (1) Lenkerfedern (3)(4) vorzusehen, welche parallel zur Verschiebungsrichtung (8) der Schwingungsmasse (1) angeordnet sind, und die Schwingungen der Masse (1) nicht signifikant behindern. Die Lenkfedern, sind Blattfedern , welche in Richtung (9) leicht verschiebbar sind und in der Bewegungsrichtung (8) eine hohe Steifigkeit haben, um die Masse (1) exakt in die vorgegebene Position (5)(6) zu bringen. Gleichzeitig erfolgt durch die Lenkerfedern eine in Richtung (13) erforderliche Fixierung der Masse. Somit hat die Masse nur in Richtung (9) die durch die Blattfederanordnung (2) vorgegebene Steifigkeit und ist in den anderen Richtungen gefesselt.

Wie bereits erwähnt, ist es auch möglich, in einen erfindungsgemäßen Schwingungstilger mehr als zwei Blattfederanordnungen einzubauen. Es können also auch drei und mehr Blattfederanordnungen eingesetzt werden, die so angeordnet werden können, dass der Tilger nicht nur in einer linearen Richtung wirksam ist, sondern auch in einer festgelegten Ebene. Eine solche Ausführungsform ist ebenfalls Gegenstand der Erfindung, Dabei wird die Tilgermasse (1) von einem Massenring gebildet, der konzentrisch um eine konzentrisch gelagerte Trägereinheit (11) ist.

Gegenstand der Erfindung ist somit im Detail ein zweidimensional wirksamer Schwingungstilger, der mehr als zwei, vorzugsweise drei bis acht Blattfederanordnungen (2) aufweist, welche sternförmig und mit einem gleichen oder unterschiedlichen Abstandswinkel zueinander angeordnet sind und nach außen über ihren ersten End- oder Einspannbereich (2.1.1) mit der ringförmigen, konzentrisch um die Trägereinheit (11) angeordneten Schwingungsmasse (1) fest verbunden sind. Der andere End- oder Einspannbereich (2.1.1) der einzelnen Blattfederanordnungen (2) ist direkt mit der konzentrisch gelagerten Trägereinheit (11) verbunden, welche zudem eine Drehvorrichtung (14-18) aufweist. Dabei ist die ringförmige Schwingungsmasse so angeordnet ist, dass sie in einer Ebene radial zur konzentrisch gelagerten Trägereinheit (11) zu schwingen vermag. Die Verbiegung der einzelnen kreisförmig angeordneten Blattfederanordnungen dieser Ausführungsform erfolgt durch Verdrehen der konzentrisch gelagerten Trägervorrichtung gegenüber der Schwingungsmasse (1) mittels der besagten Drehvorrichtung auf dem Trägerbauteil (11), so dass eine Änderung der vorgegebenen Auslenkung (2.1.2) durch reversible Verformung in Verbiegungsrichtung (2.1.6) aller radial und sternförmig angeordneten Blattfederanordnungen (2) und damit eine Änderung deren Steifigkeit erreicht wird. Der Winkel zwischen den einzelnen sternförmig angeordneten Blattfederanordnungen ist vorzugsweise identisch, wenn eine in der Ebene gleichmäßige Dämpfung nötig ist. Der Winkel kann auch unterschiedlich sein, falls in einer ausgewählten Richtung eine abweichender Dämpfungseffekt erzielt werden soll

Das hier vorgestellte Erfindungsprinzip kann auch für Systeme mit rotierenden Bauteilen oder Maschinen und dadurch erzeugten Schwingungen eingesetzt werden. In einer besonderen Ausführungsform sind die besagten Blattfederanordnungen (2) tangential zur rotierenden Einheit angeordnet. Es könnten auch zwei Blattfeder-Sterne übereinander angeordnet werden, welche sich gegeneinander verdrehen und mit einer gemeinsamen Masse verbunden sind.

Gegenstand der Erfindung ist somit auch ein entsprechender Schwingungstilger, bei dem die Schwingungsmasse (34) ringförmig um eine konzentrisch gelagerte Trägereinheit der Maschine (30) oder die Maschine selbst angeordnet ist, welche bei Anregung durch Störfrequenzen kreisförmige Schwingungen ausführt. Die ringförmige Schwingungsmasse (34) besteht dabei aus mindestens zwei, vorzugsweise drei, vier, fünf, sechs oder mehr Kreissegmenten, welche durch eine entsprechende Anzahl von Blattfederanordnungen (2) miteinander verbunden sind, wobei die besagten Blattfederanordnungen (2) in Bezug auf ihre Längsachse so tangential angeordnet sind, dass sie bei Rotationsschwingungen der Trägereinheit bzw. der Maschine (30) dämpfend wirksam werden, wie dies oben und unten genauer beschrieben ist. Vorzugsweise sind auch hier die tangential eingebauten Blattfederanordnungen symmetrisch bzw. gleichmäßig um die Kreisform herum verteilt, wenn ein richtungsunabhängiger Dämpfungseffekt erzielt werden soll.

Die erfindungsgemäßen Schwingungstilger können, falls dies erforderlich oder gewünscht ist, noch zusätzliche an sich bekannte Dämpfungselemente aufweisen. Solche Dämpfungselemente können beispielsweise Elastomerdämpfer, Hydraulikdämpfer, Wirbelstromdämpfer oder pneumatische Dämpfer sein.

Die erfindungsgemäßen Schwingungstilger zeichnen sich unter anderen dadurch aus, dass bei Krafteinwirkung in der vorgesehenen Richtung das Verhältnis des initiierten Schwingungsweges der Tilgermasse (1) zu dem eingeleitetem Schwingungsweg des zu beruhigenden Schwingungssystem > 50 > 100, > 200, oder >300 ist, wobei das besagte Verhältnis bei übliche Betriebsbedingungen in der Regel Werte zwischen 100 und 400 im ungedämpften Zustand annimmt.

Die erfindungsgemäßen Schwingungstilger zeichnen sich weiterhin dadurch aus, dass bei Auslenkung der vorgebogenen Blattfederanordnung (2) um beispielsweise 30% gegenüber der ursprünglichen vorgebogenen Auslenkung (2.1.2) in die Richtung, welche die Steifigkeit der Blattfederanordnung bei Belastung erhöht, eine im Schnitt etwa doppelte bis dreifache Erhöhung der Frequenz gegenüber der Frequenz der Ausgangsauslenkung erreicht wird. Wird umgekehrt eine Auslenkung der vorgebogenen Blattfederanordnung (2) um 30% der ursprünglichen Auslenkung (2.1.2) in entgegengesetzter Richtung durchgeführt, also in die Richtung, welche die Steifigkeit der Blattfederanordnung bei Belastung verringert, so kann eine Absenkung der Frequenz um 20 - 50 % gegenüber der Ausgangsauslenkung erreicht werden. In beiden Fällen hängt der jeweilige Wert von der gewählten Ausgangssteifigkeit der Blattfederanordnung bzw. der Blattfedern ab.

Die hier beschriebenen erfindungsgemäßen Schwingungstilger können zur Reduzierung oder Beseitigung von Störfrequenzen in einer Maschine, einem Fahrzeug oder einer Anlage, eingesetzt werden, welche insbesondere von rotierenden Bauteilen eines Getriebes, Generators, eines Antriebstranges oder von Rotorblättern oder Rotornaben verursacht werden.

### Detaillierte Beschreibung der Ausführungsformen

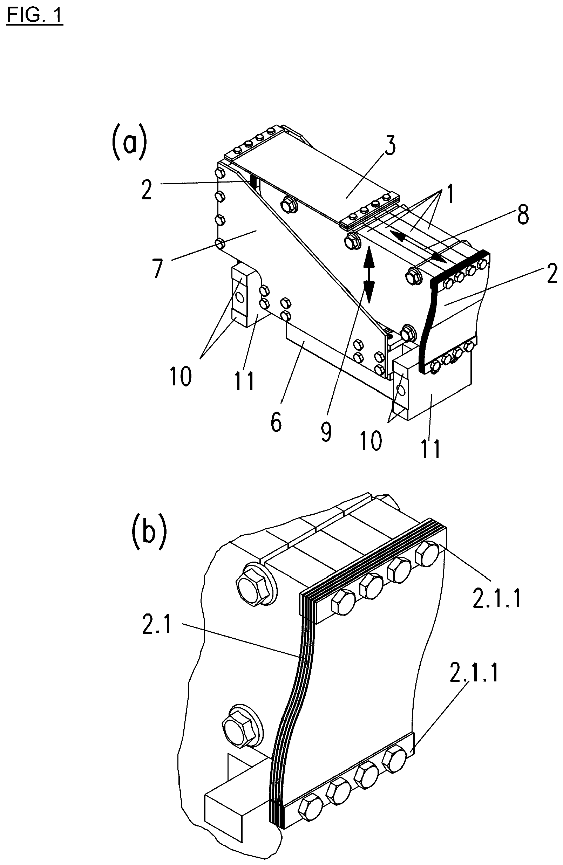

Fig. 1 (a),(b) zeigt zwei unterschiedliche perspektivische Ansichten eines erfindungsgemäßen, eindimensional wirksamen Schwingungstilgers.

Die Schwingungsmasse (1) besteht hier aus mehreren miteinander verbundenen rechteckigen Platten, deren Anzahl und Masse je nach Anforderung ausgewählt werden kann. Das Paket der Massenplatten (1) wird an den beiden seitlichen Flächen begrenzt durch zwei Blattfederanordnungen (2), welche aus mehreren, hier fünf übereinandergestapelten Blattfedern (2.1) zusammengesetzt sind. Die Blattfedern sind mittig und gleichsinnig S-förmig vorgebogen, wobei ihre beiden (obere und untere) End- oder Einspannbereiche parallel aber versetzt zueinander ausgerichtet sind. Die einzelnen Blattfedern sind in dieser Ausführungsform durch einen geringen Abstand/Spalt (< 2mm) voneinander getrennt. Jede der beiden Blattfederanordnungen ist so angeordnet, das der obere Endbereich (2.1.1) der Anordnung an der Seite der Schwingungsmasse-Platten (1) befestigt ist, während der untere End- oder Einspannbereich (2.1.1) mit der Trägereinheit (11) des Schwingungssystems (Anlage, Maschine, etc.) fest verbunden ist. Die Trägereinheit (11) besitzt zwei

Befestigungsflächen (10) für das zu dämpfende Schwingungssystem.

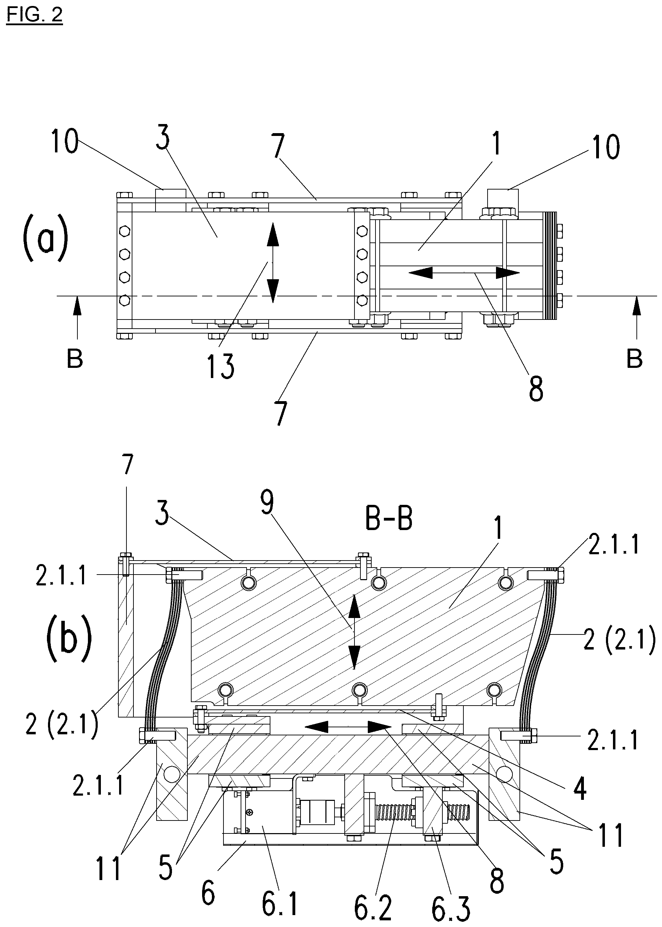

Fig. 1 (a) zeigt ferner eine obere Lenkerfeder (3) die an einer Position mit dem Paket der Masseplatten (1) fest verbunden ist, und welche die im Betrieb in vertikaler Richtung (9) schwingenden Massenplatten führt um ein Verkanten oder Ausbrechen bei Krafteinwirkung zu verhindern. Die Lenkerfeder (3) ist über ein Trägerblech (7) mit einer unteren Lenkerfeder (4) verbunden (hier nicht abgebildet), welche an der Unterseite der Schwingungsmasse (1) befestigt ist, und die gleiche Aufgabe hat wie die obere Lenkerfeder (3). Fig. 2 (a) zeigt die Sicht von oben auf den erfindungsgemäßen Schwingungstilger, wie in Fig. 1 beschrieben. Man erkennt die Lenkerfederplatte (3) welche von zwei Lenkerfeder-Trägerblechen (7) gehalten wird, damit die Masseneinheit (1) sich bei Krafteinwirkung unter anderem nicht in die Querrichtung (13, senkrechter Doppelpfeil) bewegen kann. Ferner ist die Richtung (8) eingezeichnet, in denen die Schwingungsmasse bei Betätigung der Verschiebevorrichtung (5)(6) (nicht gezeigt) durch Verbiegen der Blattfederanordnungen (2) bewegt wird.
Fig. 2 (b) zeigt eine Seitenansicht des erfindungsgemäßen Schwingungstilgers der Fig: 1. Man sieht jetzt die beiden außen angeordneten S-förmig gebogenen Blattfederanordnungen aus mehreren einzelnen voneinander getrennten Blattfedern. In ihrem oberen Endbereich erkennt man die Befestigung mit der Schwingungsmasse (1). Im unteren Endbereich sind die Federpakete mit der Trägervorrichtung (11) fest verbunden. Auf der Trägervorrichtung ist eine Verschiebevorrichtung montiert, die entlang der Querverbindung der Trägervorrichtung In Richtung (8) verschoben werden kann. Bei der gezeigten Ausführungsform ist diese Verschiebungsvorrichtung mit einem Antriebssystem (6) ausgestattet: Dabei sind: (6.1): Antriebsmotor, (6.2): Verschiebespindel, (6.3): Spindelmutter. Die Verschiebevorrichtung kann manuell, pneumatisch, hydraulisch oder pneumatisch betrieben werden kann. Die Verschiebeeinheit (5) die entlang der Richtung (8) hin und her geschoben werden kann, ist linksseitig mit der Trägervorrichtung (1) der Lenkerfedern (3)(4) verbunden. Bei Verschieben der Vorrichtung (5) nach rechts (8), wird somit die Schwingungsmasse (1) ebenfalls nach rechts bewegt, wodurch die beidseitigen Blattfederanordnungen (2) gegenüber ihrer ursprünglichen Verbiegung weiter aufgebogen bzw. weiter in Richtung (8) ausgelenkt werden (Vergrößerung der ursprünglichen "S-Form"). Dadurch wird ihre Steifigkeit in Bezug auf die senkrecht (9) wirksamen Schwingungskräfte reduziert, was ein Absinken der Frequenz des Systems zur Folge hat. Bei Verschiebung nach links wird folglich die ursprüngliche Auslenkung der Blattfedern verringert (Verkleinerung der "S-Form"), was zu erhöhter Steifigkeit und zu einer höheren Frequenz führt.

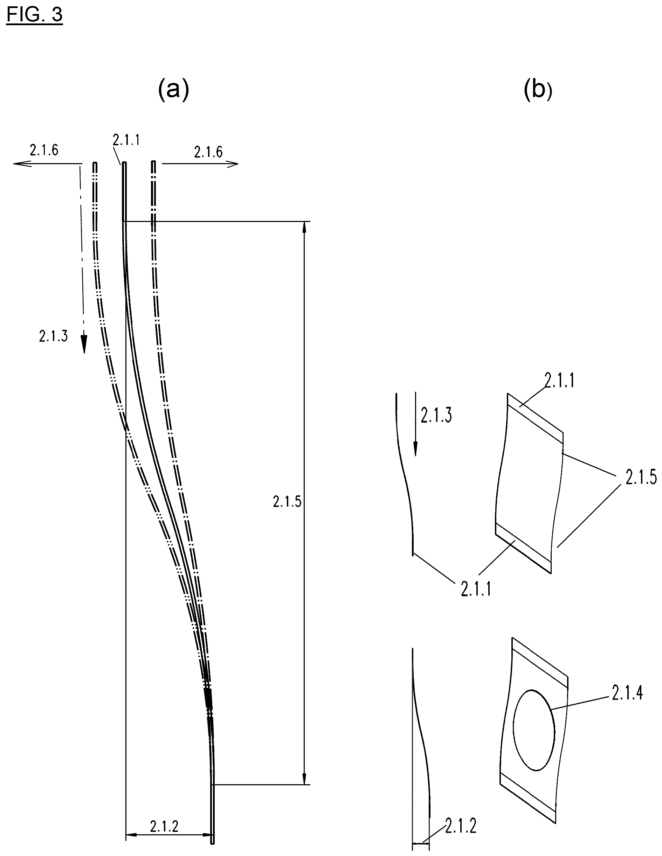

Fig. 3 (a),(b) zeigt Details einer einzelnen erfindungsgemäßen Blattfeder (2.1), welche vorzugsweise als Paket mehrerer solche Blattfedern im erfindungsgemäßen Schwingungstilger eingesetzt wird. Fig. 3(a) stellt die Seitenansicht einer solchen Feder im kräftefreien Zustand (durchgezogener Verlauf). (2.1.1) stellt den Endbereich dar, an dem die Feder eingespannt bzw. befestigt wird. Das eingezeichnete Maß (2.1.2) stellt die ursprüngliche vorgebogene Auslenkung der Feder dar, entsprechend der Ausprägung der S-Form der Feder. Das Maß 2.1.6 gibt die Richtung der zusätzlichen oder verminderten Auslenkung der Feder bei Verschiebung der Masse in die Richtung (2.1.6) gegenüber dem Ausgangsauslenkung (2.1.2) an. Entsprechend sind die dazu gehörigen Federn eingezeichnet (Strich-Punkt-Linien). Bei schwingender Masse (1) werden die Blattfedern in Belastungsrichtung (2.1.3) federnd verbogen. Ferner ist für die drei Federzustände die freie Federlänge (2.1.5) eingezeichnet. Fig. 3 (b) zeigt mehrere perspektivische Ansichten der Blattfeder von Fig. 3(a) zur Verdeutlichen. In einer speziellen weiteren Ausführungsform weist eine solche Blattfeder oder Blattfederanordnung eine mittige Aussparung (2.1.4),. welche zur dynamischen Eigenfrequenzänderung der Feder nützlich sein kann.

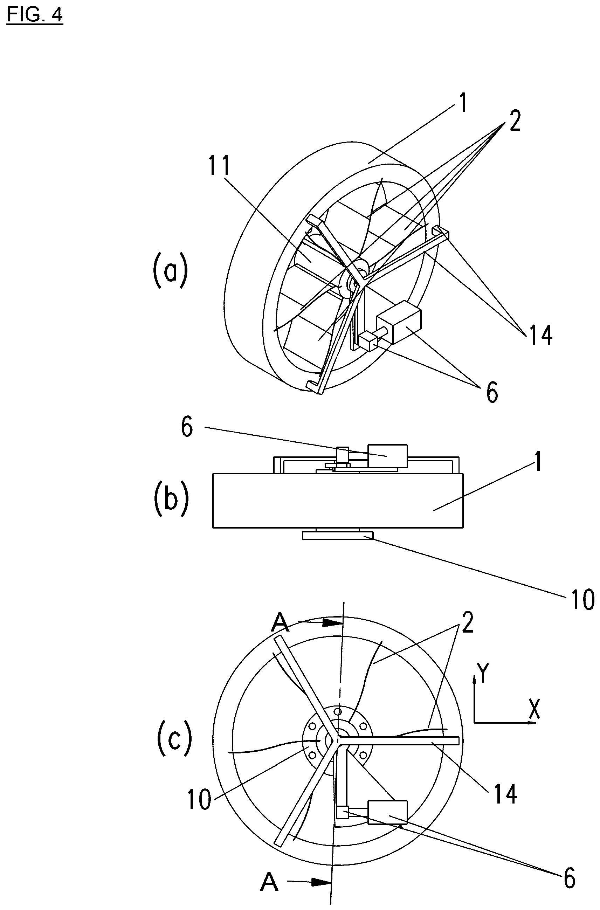

Fig. 4, 5 und 6 zeigen eine Ausführungsform des erfindungsgemäßen Tilgers, welcher zweidimensional, also in einer ausgewählten Ebene wirksam ist. Fig. 4(a) zeigt eine perspektivische Sicht einer solchen Ausführungsform. Fig. 4(b) zeigt die Sicht von oben bzw. unten, und Fig. 4 (c) zeigt die Sicht in einer Seitenansicht. Dabei stellt (1) die Schwingungsmasse dar, welche vorzugsweise eine Ringform aufweist und um eine gedachte Achse im Mittelpunkt der von der Masse gebildeten Kreisform senkrecht zur Ringebene drehbar gelagert ist. Es kann aber auch jede andere geometrische Form gewählt werden, z.B. ein Dreieck, Quadrat, Rechteck oder ein beliebiges Vieleck. Wesentlich ist, dass ein Freiraum für die Blattfedern innerhalb des Massekörpers 1 ausgespart ist. Die Trägereinheit (11) mit Anbindungsflächen (10) für das Schwingungssystem ist ebenfalls konzentrisch angeordnet. Der Massenring ist über mehrere, im gezeigten Fall sechs, im konkreten Fall gleichmäßig verteilte und sternförmig angeordnete S-förmig vorgebogenen Blattfederanordnungen (2) mit der besagten konzentrisch gelagerten Trägereinheit (11) verbunden (die Blattfederanordnungen können auch ungleichmäßig verteilt sein, wenn gewünscht ist, dass in unterschiedliche Frequenzen in unterschiedliche Richtungen gedämpft werden sollen). Dabei ist der eine End- oder Einspannbereich (2.1.1) der Blattfederanordnung mit dem Massenring (1) verbunden, und der zweite End- oder Einspannbereich mit der Trägereinheit. Die Trägereinheit kann über drehbare Verstell-Hebel und einem Antrieb (6) gegenüber dem Massenring verdreht werden, wodurch sich all vorhandenen Blattfederanordnungen (2) je nach Richtung der Drehrichtung mehr oder weniger verbiegen im Vergleich zu ihrer Ausgangsverbiegung. Somit kann die Steifigkeit des Tilgers leicht verstellt und an die Störfrequenzen des Schwingungssystems angepasst werden.

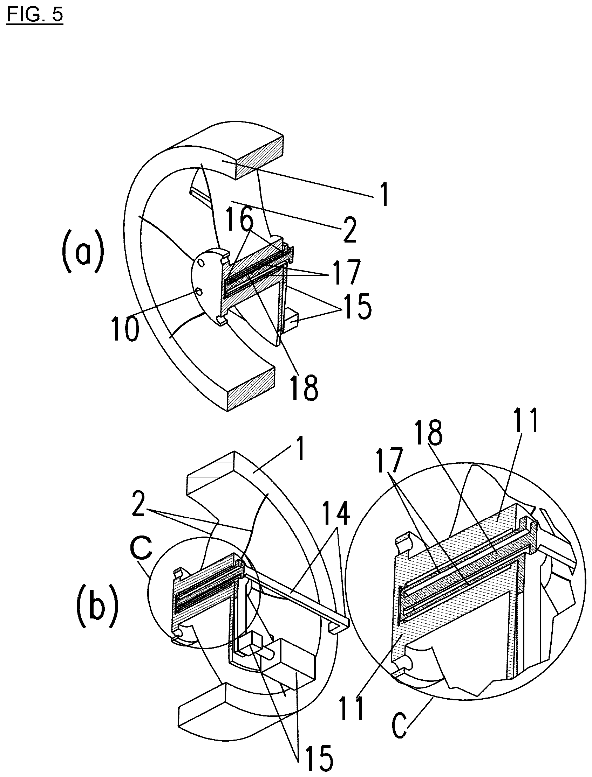

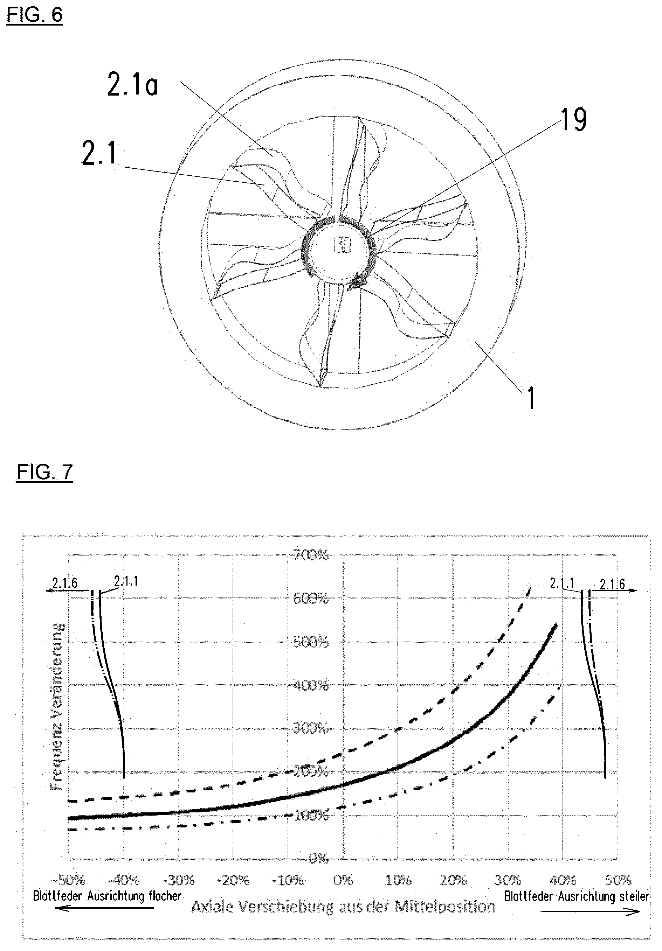

Fig. 5 (a)(b) zeigt Details der Verdrehungseinheit (14-18) im Zentrum des Tilgers. Dabei stellt (14) einen Stellhebel dar, (15) einen Torsionshebel, (16) das Drehlager, (17) ein Torsionsrohr, und (18) einen Torsionsstab. Um die erforderliche Bewegungsfreiheit der Masse (1) zu ermöglichen ist die Reihenschaltung des Torsionsrohres (17) mit dem Torsionsstab (18) vorgesehen. Gemeinsam bilden diese einen leicht biegbaren Torsionsstab. Um auch bei kleinen Frequenzen einen möglichst geringen radialen Steifigkeitseinfluss der Drehlagerung auf das Gesamtsystem zu erreichen, ist es auch möglich, mehrerer Rohre mäanderförmig ineinander anzuordnen. Fig. 6 zeigt die gleiche Ausführungsform wie in den Abbildungen 4 und 5. (2.1) stellt dabei die Blattfederanordnungen vor Beginn der Verstellung dar, während (2.1.a) die selbe Blattfederanordnung nach Drehung gegenüber der konzentrisch gelagerten Trägereinheit in der angegebenen Pfeilrichtung (19) zeigt, was zu einer größeren Verbiegung (Auslenkung) der einzelnen Blattfederanordnungen und damit zu einer verringerten Steifigkeit und folglich zu einer Verschiebung zu niedrigen Frequenzen führt.
Fig. 7 zeigt ein typische Kennlinie (Frequenzänderung des Schwingungssystem zu axialer Verschiebung der Blattfeder) von drei Blattfederanordnung mit unterschiedlicher Ausgangssteifigkeit. Die Ausgangssteifigkeit wird generell bestimmt unter anderem durch die Anzahl der Einzelfedern, die Dicke der Einzelfedern, die freie Federlänge, und die ursprüngliche Vorbiegung in S-Form. Die mittlere durchgezogene Linie stellt die Kennlinie einer Blattfederanordnung mit einer bestimmten Steifigkeit dar. Die obere gestrichelte Kennlinie bildet den Verlauf für eine Blattfederanordnung mit vergleichsweise höherer Steifigkeit ab, während die untere gestrichelte Kennlinie den entsprechenden Zusammenhang für eine im Vergleich weiche Federanordnung darstellt. Der X-Achsenwert gibt die Prozent der positiven oder negativen Verschiebung oder Verdrehung gegenüber der kräftefreien vorgebogenen Feder (0%) an. Man erkennt, dass bei einer positiven Verschiebung (0 bis +50%)die Blattfederausrichtung steiler wird, was zu einer deutlichen Erhöhung der Frequenz führt. Eine negative Verschiebung (0 bis -50%)führt zu einer flacheren Blattfederausrichtung und damit zu einer niedrigeren Frequenz, Man kann aus allen drei Kurven erkennen, dass bei einer zusätzlichen Auslenkung / Verbiegung der Federn die Frequenz des Tilgersystems abnimmt und bei Verringerung der Auslenkung / Verbiegung zunimmt Dabei steigt die Frequenz, wenn die verringerte Auslenkung +20% gegenüber der Ausgangsauslenkung beträgt, um etwa 100% gegenüber der Ausgangsfrequenz an. Bei +30% relative reduzierte Auslenkung / Verbiegung erhält man bereits eine Frequenzerhöhung um 150 - 200%, und bei einer zusätzlichen Reduzierung der Verbiegung von +40% gegenüber der Ausgangsauslenkung steigt die Frequenzänderung bereits um bis zu 400 % an. Wird hingegen die ursprüngliche Auslenkung/Verbiegung vergrößert gegenüber dem Ausgangswert (negative Werte auf der X-Achse) durch entsprechende entgegengerichtete Verschiebung bzw. Verdrehung, dann verringert sich die Steifigkeit der Blattfedern, was eine Absenkung der Frequenz zur Folge hat. Bei 20% Vergrößerung (- 20%) der Auslenkung sinkt die Frequenz um ca. 20%, bei 30% Vergrößerung der Auslenkung (-30%) sinkt die Frequenz um etwa 40%, und bei 40% Vergrößerung der Auslenkung (- 40%) um etwa 50%.Weitere Vergrößerungen der Auslenkung haben nur noch einen sehr geringen Einfluss auf die Frequenz.

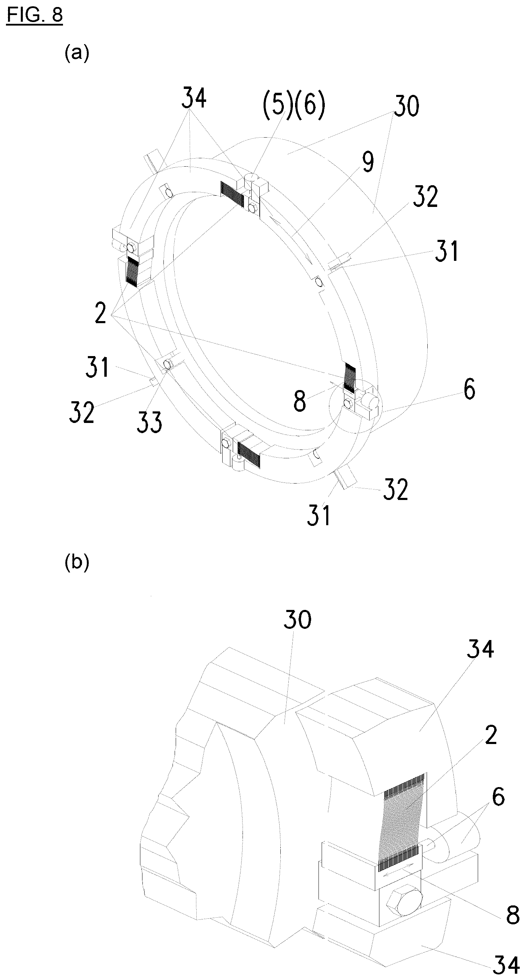

Fig. 8 (a)(b) zeigt eine Ausführungsform des erfindungsgemäßen Schwingungstilgers mit einer kreisförmigen bzw. tangentialen Anordnung der Blattfederanordnungen. Hiermit können rotierende Bauteile adaptiv bedämpft werden. Eine Tilgermasse (34) ist dabei über tangential angeordnete Pakete von Blattfederanordnungen (2) an die kreisförmig schwingende Maschine oder einem Trägerteil dieser Maschine angekoppelt. Im konkreten Fall sind vier (es können aber auch drei bis acht) vorzugsweise gleichmäßig verteilte Pakete von Blattfederanordnungen (2) (umfassend 20 - 40 einzelne gebogenen Blattfedern) an der Tilgermasse befestigt. Die Tilgermasse selbst umfasst entsprechende vorzugsweise kreisförmige Segmente, die über die besagten Blattfederanordnungen miteinander verbunden sind. Die Blattfederanordnungen sind, wie beschrieben, mit den entsprechenden Verschiebevorrichtungen (6) zur Einstellung der Federsteifigkeit ausgestattet. Die Frequenz des Systems wird also durch Verschieben der Federeinheiten (2) entlang ihrer Verschieberichtung (8) (→ Änderung der gebogenen S-Form) eingestellt. Die Tilgermassensegmente (34) sind weiterhin über entsprechend angeordnete Lenkerfedern (31)(33) mit der rotierenden Trägereinheit (30), bzw. mit der rotierenden Maschine selbst verbunden.

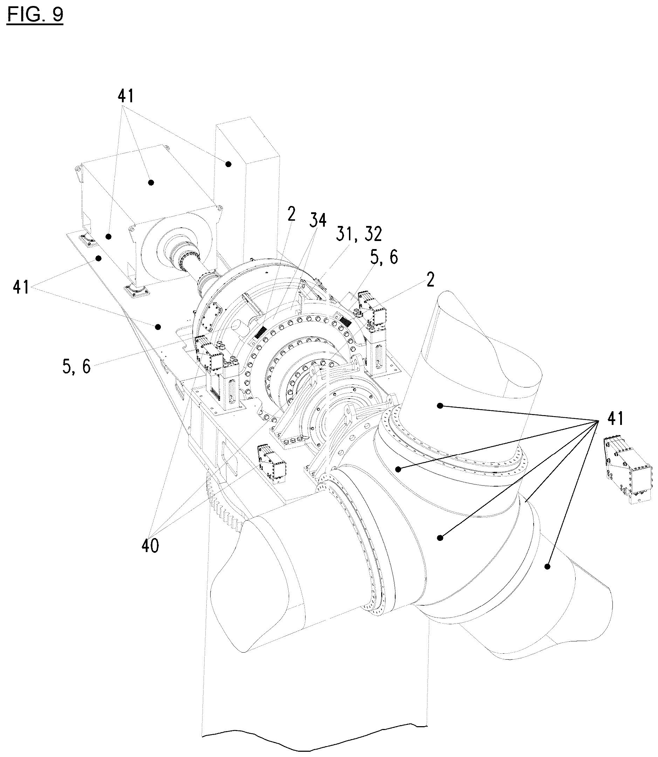

Fig. 9 zeigt eine Windkraftanlage mit Getriebe in welcher ein erfindungsgemäßer kreisförmiger Schwingungstilger gemäß Fig. 8 eingebaut ist (2)(5(9(6)(31)(32(34). Der Tilger ist so am Getriebe eingebaut, dass er Torsionsschwingungen des Getriebes aufnehmen kann. Statt eines ringförmigen erfindungsgemäßen Schwingungstilgers können auch einzelne entsprechend kreisförmig angeordnete Tilger gemäß Fig. 1 oder 2 eingesetzt werden. Die Positionen (40) und (41) stellen dabei Befestigungspunkte an der Windkraftanlage dar. Der erfindungsgemäße Schwingungstilger kann auch mit der Rotornabe verbunden sein.

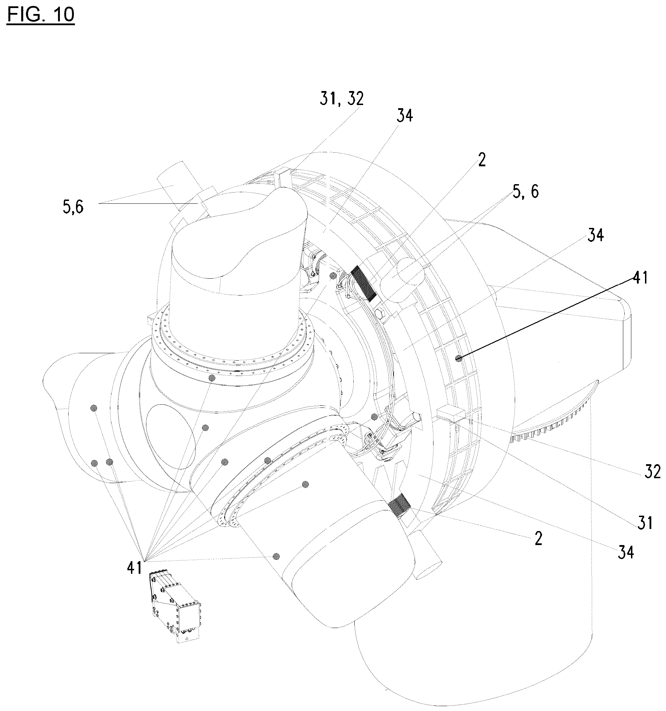

Fig. 10 zeigt eine direkt getriebene Windkraftanlage (ohne Getriebe) unter Verwendung eines kreisförmigen Schwingungstilgers gemäß Fig. 8. Der kreisförmige erfindungsgemäße Schwingungstilger kann dabei sowohl im Stator als auch im Rotor des Generators angebracht sein. Ansonsten gelten die gleichen Bedingungen wie bei der Anlage mit Getriebe wie oben beschrieben.

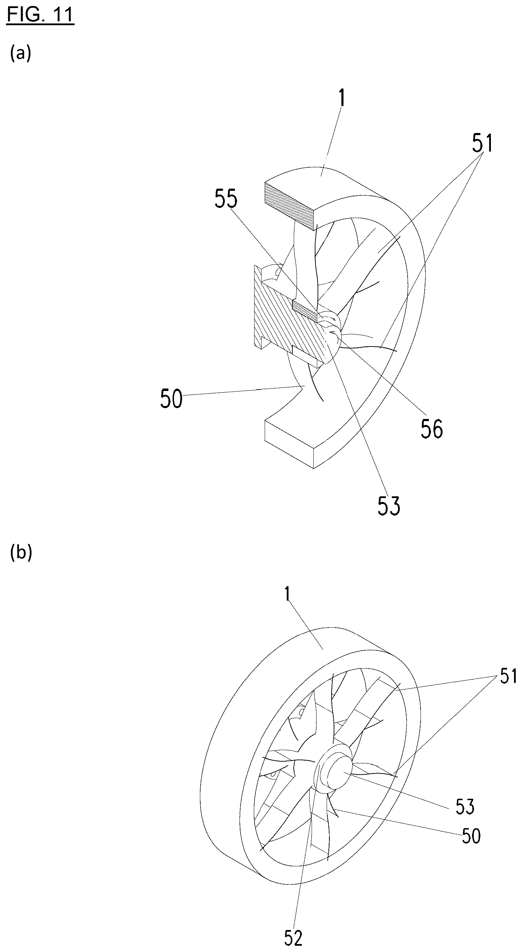

Fig. 11 zeigt eine abgewandelte Ausführungsform des erfindungsgemäßen Tilgers gemäß der Fig. 4 - 6 in perspektivischer Sicht. (a) zeigt eine halbseitigen Schnitt durch die Ringform des Tilgers, währen (b) die vollständige Ringform wiedergibt.

Bei dieser Ausführungsform sind zwei Sterne aus Blattfedern bzw. Blattfeder-Pakete gemeinsam mit einer ringförmigen Masse (1) verbunden. Dabei gibt es einen vorderen Blattfederstapel (51) und einen hinteren Blattfederstapel (50) in Form eines Sterns. Beide sind gegenläufig zueinander angeordnet und bewegbar, so dass beide Sterne bei Verdrehung gegeneinander die gleichen radialen Steifigkeitsveränderungen erfahren.

Die Nabe (52) und der Bolzen (53) werden mit einem angeflanschten Getriebeantrieb oder einem Hebel und einem Kraftelement gegeneinander verdreht, um die gewünschte Steifigkeit einzustellen.

## Patentansprüche

1. An Störfrequenzen anpassbarer adaptiver ein- oder zweidimensional wirksamer Schwingungstilger für ein Schwingungssystem, umfassend eine Maschine, ein Fahrzeug oder eine Anlage, welches den besagten und zu dämpfenden Störungsfrequenzen ausgesetzt ist, im Wesentlichen umfassend
(i) eine Schwingungsmasse (1) (34),
(ii) mindestens eine bei Kraftfluss schwingungsfähige, eine oder mehrere Blattfedern (2.1) aufweisende Blattfederanordnung (2) von vorgegebene Steifigkeit und einer freien Federlänge (2.1.5), welche einerseits direkt oder indirekt mit einer Trägereinheit (11) (30) der besagter Maschine oder Anlage und andererseits direkt oder indirekt mit der
Schwingungsmasse (1) (34) fest verbunden ist und gegenüberliegende erste und zweite End- oder Einspannbereiche (2.1.1) aufweist, die gegeneinander so versetzt sind, dass sich eine definierte voreingestellte Auslenkung (2.1.2) ergibt, und
(iii) eine Vorrichtung zur Veränderung der vorgegebenen Steifigkeit der Blattfederanordnung (2) und damit zur Frequenzanpassung des Schwingungssystem an die Störfrequenzen, wobei die Vorrichtung sowohl mit der Blattfederanordnung (2) als auch mit der Trägervorrichtung (11)(30) des Schwingungssystem in Verbindung steht, **dadurch gekennzeichnet, dass**
(iv) die mindestens eine Blattfederanordnung (2) eine oder mehrere einzelne, übereinandergestapelte Blattfedern (2.1) umfasst, welche um ihre Querachse symmetrisch im mittleren Bereich S-förmig vorgebogen sind, und im kräftefreien Zustand eine Auslenkung (2.1.2) von 15-30% der freien Federlänge (2.1.5) in Richtung der Längsachse der Blattfedern, bzw. der Blattfederanordnung aufweisen, wobei die Längsachse der Blattfedern, bzw. der Blattfederanordnung der Richtung (2.1.3) der während des Betriebs erfolgten Krafteinwirkung oder Belastung entspricht, und
(vi) die Vorrichtung zur Veränderung der vorgegebenen Steifigkeit eine Verschiebeeinrichtung (5)(6) oder eine Dreheinrichtung (14-18) umfasst, wobei die Vorrichtung so gestaltet und angeordnet ist, dass durch sie eine reversible Verbiegung der vorgebogenen Blattfederanordnung in senkrechte Richtung (2.1.6) zur Längsachse der Blattfederanordnung (2) und damit je nach Richtung der Verschiebung oder Drehung durch die Vorrichtung eine Vergrößerung oder Verminderung der voreingestellten Auslenkung (2.1.2) der vorgebogenen Blattfederanordnung erfolgt.

2. Adaptiver **eindimensional** wirksamer Schwingungstilger umfassend eine Maschine, ein Fahrzeug oder eine Anlage, welches den besagten und zu dämpfenden Störungsfrequenzen ausgesetzt ist, im Wesentlichen umfassend
(i) eine Schwingungsmasse (1)
(ii) mindestens eine bei Kraftfluss schwingungsfähige, eine oder mehrere Blattfedern (2.1) aufweisende Blattfederanordnung (2) von vorgegebene Steifigkeit und einer freien Federlänge (2.1.5), welche einerseits direkt oder indirekt mit einer Trägereinheit (11) (30) der besagter Maschine oder Anlage und andererseits direkt oder indirekt mit der
Schwingungsmasse (1) fest verbunden ist und gegenüberliegende erste und zweite End- oder Einspannbereiche (2.1.1) aufweist, die gegeneinander so versetzt sind, dass sich eine definierte voreingestellte Auslenkung (2.1.2) ergibt, und
(iii) eine Vorrichtung zur Veränderung der vorgegebenen Steifigkeit der Blattfederanordnung (2) und damit zur Frequenzanpassung des Schwingungssystem an die Störfrequenzen, wobei die Vorrichtung sowohl mit der Blattfederanordnung (2) als auch mit der Trägervorrichtung (11)(30) des Schwingungssystem in Verbindung steht, **dadurch gekennzeichnet, dass**
(iv) die Schwingungsmasse (1) von einer oder mehreren zusammengepackten Platten gebildet wird und seitlich an gegenüberliegenden Punkten begrenzt wird durch mindestens zwei parallel angeordnete, im kräftefreien Zustand vorgebogene Blattfederanordnungen (2),welche eine oder mehrere einzelne, übereinandergestapelte Blattfedern (2.1) umfassen, und jeweils über den ersten End- oder Einspannbereich (2.1.1) mit der Schwingungsmasse (1) und über den zweiten End- oder Einspannbereich (2.1.1) mit der Trägereinheit (11) fest verbunden sind, wobei die Schwingungsmasse in einer Richtung (9) schwingen kann, welche der Längsachse bzw. der Belastungsrichtung (2.1.3) der Blattfederanordnungen (2) entspricht, und
(v) die Vorrichtung zur Veränderung der vorgegebenen Steifigkeit der Blattfederanordnung (2) eine mechanische, hydraulische, pneumatische oder elektrische Verschiebeeinrichtung (5)/6) ist, welche auf der Trägereinheit (11) oberhalb oder unterhalb der Schwingungsmasse (1) und der Blattfederanordnungen (2) so angeordnet ist, dass durch sie eine reversible Verbiegung der vorgebogenen Blattfederanordnung in senkrechte Richtung (2.1.6) zur Längsachse der Blattfederanordnung und damit je nach Richtung der Verschiebung durch die Vorrichtung eine Vergrößerung oder Verminderung der voreingestellten Auslenkung (2.1.2) der vorgebogenen Blattfederanordnung erfolgt.

3. Adaptiver eindimensional wirksamer Schwingungstilger nach Anspruch 2, **dadurch gekennzeichnet, dass** die Schwingungsmasse (1) bei ihrer durch die veränderte Auslenkung der Blattfederanordnungen (2) bedingten Bewegung in eine Verschiebungsrichtung (8) von Lenkungsfedern (3)(4) parallel zur Verschiebungsrichtung (8) geführt und gehalten wird.

4. Adaptiver **zweidimensional** wirksamer Schwingungstilger umfassend eine Maschine, ein Fahrzeug oder eine Anlage, welches den besagten und zu dämpfenden Störungsfrequenzen ausgesetzt ist, im Wesentlichen umfassend
(i) eine Schwingungsmasse (1)
(ii) mindestens eine bei Kraftfluss schwingungsfähige eine oder mehrere Blattfedern (2.1) aufweisende Blattfederanordnung (2) von vorgegebene Steifigkeit und einer freien Federlänge (2.1.5), welche einerseits direkt oder indirekt mit einer Trägereinheit (11) (30) der besagter Maschine oder Anlage und andererseits direkt oder indirekt mit der
Schwingungsmasse (1) fest verbunden ist und gegenüberliegende erste und zweite End- oder Einspannbereiche (2.1.1) aufweist, die gegeneinander so versetzt sind, dass sich eine definierte voreingestellte Auslenkung (2.1.2) ergibt,
(iii) eine Vorrichtung zur Veränderung der vorgegebenen Steifigkeit der Blattfederanordnung (2) und damit zur Frequenzanpassung des Schwingungssystem an die Störfrequenzen, wobei die Vorrichtung sowohl mit der Blattfederanordnung (2) als auch mit der Trägervorrichtung (11)(30) des Schwingungssystem in Verbindung steht, **dadurch gekennzeichnet, dass**
(iv) die Schwingungsmasse (1) ringförmig um die konzentrisch gelagerte Trägereinheit (11) so angeordnet ist, dass sie in einer Ebene radial zur Trägereinheit zu schwingen vermag, und mit dieser über drei bis acht im kräftefreien Zustand vorgebogene Blattfederanordnungen (2) verbunden ist, welche eine oder mehrere einzelne, übereinandergestapelte Blattfedern (2.1) umfassen, und sternförmig und mit einem ausgewählten gleichen oder unterschiedlichen Abstandswinkel zueinander innerhalb des Massenringes angeordnet sind, und mit der Masse über ihren ersten End- oder Einspannbereich (2.1.1) sowie mit besagter konzentrisch gelagerter Trägereinheit (11) über ihren zweiten End- oder Einspannbereich (2.1.1) verbunden sind, und
(v) die Vorrichtung zur Veränderung der vorgegebenen Steifigkeit der Blattfederanordnungen (2) eine mechanisch, hydraulisch, pneumatische oder elektrisch betriebene, konzentrisch gelagerte Drehvorrichtung (14 - 18) umfasst, mit deren Hilfe eine Verdrehung (19) der konzentrischen Schwingungsmasse (1) gegenüber der konzentrisch gelagerten Trägereinheit (11) durchgeführt werden kann, so dass eine Änderung der voreingestellten Auslenkung (2.1.2) aller sternförmig angeordneten Blattfederanordnungen (2) erreicht wird.

5. Adaptiver **torsional** wirksamer Schwingungstilger umfassend eine Maschine, ein Fahrzeug oder eine Anlage, welches den besagten und zu dämpfenden Störungsfrequenzen ausgesetzt ist, im Wesentlichen umfassend
(i) eine Schwingungsmasse (34),
(ii) mindestens eine bei Kraftfluss schwingungsfähige, eine oder mehrere Blattfedern (2.1) aufweisende Blattfederanordnung (2) von vorgegebene Steifigkeit und einer freien Federlänge (2.1.5), welche einerseits direkt oder indirekt mit einer Trägereinheit (30) der besagter Maschine oder Anlage und andererseits direkt oder indirekt mit der
Schwingungsmasse (34) fest verbunden ist und gegenüberliegende erste und zweite End- oder Einspannbereiche (2.1.1) aufweist, die gegeneinander so versetzt sind, dass sich eine definierte voreingestellte Auslenkung (2.1.2) ergibt, und
(iii) eine Vorrichtung zur Veränderung der vorgegebenen Steifigkeit der Blattfederanordnung (2) und damit zur Frequenzanpassung des Schwingungssystem an die Störfrequenzen, wobei die Vorrichtung sowohl mit der Blattfederanordnung (2) als auch mit der Trägervorrichtung (11)(30) des Schwingungssystem in Verbindung steht, **dadurch gekennzeichnet, dass**
(iv) die Schwingungsmasse (34) ringförmig um die konzentrisch gelagerte Trägereinheit der Maschine (30) angeordnet ist, welche bei Anregung kreisförmige Schwingungen ausführt, und die ringförmige Schwingungsmasse (34) aus mindestens zwei oder drei Kreissegmenten besteht, welche durch eine entsprechende Anzahl von im kräftefreien Zustand vorgebogene Blattfederanordnungen (2) verbunden sind, welche eine oder mehrere einzelne, übereinandergestapelte Blattfedern (2.1) umfassen, wobei die besagten Blattfederanordnungen (2) in Bezug auf ihre Längsachse so tangential angeordnet sind, dass sie bei Rotationsschwingungen der Trägereinheit der Maschine (30) dämpfend wirksam werden, und
(v) die Vorrichtung zur Veränderung der vorgegebenen Steifigkeit der Blattfederanordnungen (2) eine mechanisch, hydraulisch, pneumatische oder elektrisch betriebene, Verschiebeeinrichtung (5)(6) umfasst, welche auf der Trägereinheit (30) oberhalb oder unterhalb der Schwingungsmasse (34) und der Blattfederanordnungen (2) so angeordnet ist, dass durch sie eine reversible Verbiegung der vorgebogenen Blattfederanordnung in senkrechte Richtung (2.1.6) zur Längsachse der Blattfederanordnung erfolgt, und damit je nach Richtung der Verschiebung durch die Vorrichtung eine Vergrößerung oder Verminderung der voreingestellten Auslenkung (2.1.2) der vorgebogenen Blattfederanordnung erfolgt.

6. Adaptiver Schwingungstilger nach einem der Ansprüche 2 - 5, **dadurch gekennzeichnet, dass** die Blattfedern (2.1) der Blattfederanordnungen (2) um ihre Querachse im kräftefreien Zustand symmetrisch im mittleren Bereich S-förmig vorgebogen sind und eine Auslenkung (2.1.2) von 15-30% der freien Federlänge (2.1.5) in Richtung der Längsachse der Blattfedern, bzw. der Blattfederanordnung aufweisen, wobei die Längsachse der Blattfedern, bzw. der Blattfederanordnung der Richtung (2.1.3) der während des Betriebs erfolgten Krafteinwirkung oder Belastung entspricht.

7. Adaptiver Schwingungstilger nach einem der Ansprüche 1 - 6, **dadurch gekennzeichnet, dass** die freie Federlänge (2.1.5) 50 - 500 mm, vorzugsweise 100 - 300 mm, je nach Maschine, Fahrzeug oder Anlage beträgt.

8. Adaptiver Schwingungstilger nach einem der Ansprüche 1 - 7, **dadurch gekennzeichnet, dass** die Blattfederanordnungen (2) mindestens zwei, drei, vier, fünf oder sechs Blattfedern (2.1) umfassen, welche übereinandergestapelt in einem Abstand zueinander von ≤ 2 mm angeordnet sind oder direkt aufeinander liegen.

9. Adaptiver Schwingungstilger nach Anspruch 8, **dadurch gekennzeichnet, dass** die gestapelten Blattfedern (2.1) der Blattfederanordnung (2) durch elastische Schichten in einer Dicke von > 0 und < 2 mm voneinander getrennt sind.

10. Adaptiver Schwingungstilger nach einem der Ansprüche 1 - 9, **dadurch gekennzeichnet, dass** die Blattfedern (2.1) der Blattfederanordnungen (2) eine runde oder ovale Bohrung (2.1.4) im mittleren Bereich aufweisen zur Beeinflussung der dynamischen Federeigenfrequenz.

11. Adaptiver Schwingungstilger nach einem der Ansprüche 1 -10, **dadurch gekennzeichnet, dass** bei Krafteinwirkung das Verhältnis des Schwingungsweges der Tilgermasse zu eingeleitetem Schwingungsweg des zu beruhigenden Schwingungssystem > 100 - 400 im ungedämpften Zustand ist.

12. Adaptiver Schwingungstilger nach einem der Ansprüche 1 - 11, **dadurch gekennzeichnet, dass** bei weiterer Auslenkung der vorgebogenen Blattfederanordnung (2) um 30% der ursprünglichen Auslenkung (2.1.2) in die Richtung, welche die Steifigkeit der Blattfederanordnung bei Belastung erhöht, eine doppelte bis dreifach Erhöhung der Frequenz erreicht wird je nach der Ausgangssteifigkeit der Blattfederanordnung.

13. Adaptiver Schwingungstilger nach einem der Ansprüche 1 - 11, **dadurch gekennzeichnet, dass** bei weiterer Auslenkung der vorgebogenen Blattfederanordnung (2) um 30% der ursprünglichen Auslenkung (2.1.2) in die Richtung, welche die Steifigkeit der Blattfederanordnung bei Belastung verringert eine Absenkung der Frequenz um 20 - 50 % erreicht wird je nach der Ausgangssteifigkeit der Blattfederanordnung.

14. Adaptiver Schwingungstilger nach einem der Ansprüche 1 - 13, **dadurch gekennzeichnet, dass** er ein oder mehrere zusätzliche Dämpfungselemente aufweist.

15. Maschine, Fahrzeug oder Anlage, insbesondere Windkraftanlage, umfassend einen Schwingungstilger gemäß einem der Ansprüche 1 - 14.

## Claims

1. Adaptive vibration mass damper, adjustable to disturbance frequencies and effective in one or two dimensions, for a vibration system, comprising a machine, a vehicle, or an installation, which is exposed to said disturbing frequencies to be damped, substantially comprising
(i) a vibration mass (1) (34),
(ii) at least one leaf spring arrangement (2), capable of vibrating under force flow and having one or more leaf springs (2.1), of predetermined stiffness and a free spring length (2.1.5), which is rigidly connected directly or indirectly to a support unit (11) (30) of said machine or installation and directly or indirectly to the vibration mass (1) (34) and has opposite first and second end regions or clamping regions (2.1.1) offset from each other such that there is a defined pre-set deflection (2.1.2), and
(iii) a device for changing the predetermined stiffness of the leaf spring arrangement (2) and thus for adjusting the frequency of the vibration system to the disturbance frequencies, wherein the device is connected to both the leaf spring arrangement (2) and the support device (11)(30) of the vibration system,
**characterized in that**
(iv) the at least one leaf spring arrangement (2) comprises one or more individual leaf springs (2.1) stacked on top of each other which are pre-bent in an S-shape in the central region symmetrically about their transverse axis and in the force-free state have a deflection (2.1.2) of 15-30% of the free spring length (2.1.5) in the direction of the longitudinal axis of the leaf springs or of the leaf spring arrangement, wherein the longitudinal axis of the leaf springs or of the leaf spring arrangement corresponds to the direction (2.1.3) of the force or load applied during operation, and
(vi) the device for changing the predetermined stiffness comprises a displacement apparatus (5)(6) or a rotation apparatus (14-18), wherein the device is designed and arranged such that it causes a reversible bending of the pre-bent leaf spring arrangement in a direction (2.1.6) perpendicular to the longitudinal axis of the leaf spring arrangement (2) and thus, depending on the direction of the displacement or rotation caused by the device, an increase or decrease of the pre-set deflection (2.1.2) of the pre-bent leaf spring arrangement.

2. Adaptive **one-dimensionally** effective vibration mass damper comprising a machine, a vehicle, or an installation, which is exposed to said disturbing frequencies to be damped, substantially comprising
(i) a vibration mass (1)
(ii) at least one leaf spring arrangement (2), capable of vibrating under force flow and having one or more leaf springs (2.1), of predetermined stiffness and a free spring length (2.1.5), which is rigidly connected directly or indirectly to a support unit (11) (30) of said machine or installation and directly or indirectly to the vibration mass (1) and has opposite first and second end regions or clamping regions (2.1.1) offset from each other such that there is a defined pre-set deflection (2.1.2), and
(iii) a device for changing the predetermined stiffness of the leaf spring arrangement (2) and thus for adjusting the frequency of the vibration system to the disturbance frequencies, wherein the device is connected to both the leaf spring arrangement (2) and the support device (11)(30) of the vibration system,
**characterized in that**
(iv) the vibration mass (1) is formed by one or more bundled together plates and is laterally delimited at opposite points by at least two parallel leaf spring arrangements (2) pre-bent in the force-free state which comprise one or more individual leaf springs (2.1) stacked on top of each other and are each rigidly connected to the vibration mass (1) via the first end region or clamping region (2.1.1) and to the support unit (11) via the second end region or clamping region (2.1.1), wherein the vibration mass can vibrate in a direction (9) which corresponds to the longitudinal axis or the load direction (2.1.3) of the leaf spring arrangements (2), and
(v) the device for changing the predetermined stiffness of the leaf spring arrangement (2) is a mechanical, hydraulic, pneumatic, or electrical displacement apparatus (5)/6) which is arranged on the support unit (11) above or below the vibration mass (1) and the leaf spring arrangements (2) such that it causes a reversible bending of the pre-bent leaf spring arrangement in a direction (2.1.6) perpendicular to the longitudinal axis of the leaf spring arrangement and thus, depending on the direction of the displacement caused by the device, an increase or decrease of the pre-set deflection (2.1.2) of the pre-bent leaf spring arrangement.

3. Adaptive one-dimensionally effective vibration mass damper according to claim 2, **characterized in that** the vibration mass (1) during the movement thereof in a displacement direction (8) caused by the changed deflection of the leaf spring arrangements (2) is guided and held parallel to the displacement direction (8) by steering springs (3)(4).

4. Adaptive **two-dimensionally** effective vibration mass damper comprising a machine, a vehicle, or an installation, which is exposed to said disturbing frequencies to be damped, substantially comprising
(i) a vibration mass (1)
(ii) at least one leaf spring arrangement (2), capable of vibrating under force flow and having one or more leaf springs (2.1), of predetermined stiffness and a free spring length (2.1.5), which is rigidly connected directly or indirectly to a support unit (11) (30) of said machine or installation and directly or indirectly to the vibration mass (1) and has opposite first and second end regions or clamping regions (2.1.1) offset from each other such that there is a defined pre-set deflection (2.1.2),
(iii) a device for changing the predetermined stiffness of the leaf spring arrangement (2) and thus for adjusting the frequency of the vibration system to the disturbance frequencies, wherein the device is connected to both the leaf spring arrangement (2) and the support device (11)(30) of the vibration system,
**characterized in that**
(iv) the vibration mass (1) is arranged annularly around the concentrically mounted support unit (11) such as to be able to vibrate in a plane radially with respect to the support unit and is connected thereto via three to eight leaf spring arrangements (2) pre-bent in the force-free state which comprise one or more individual leaf springs (2.1) stacked on top of each other, are arranged in a star shape and with a selected equal or different separation angle with respect to each other within the mass ring, and are connected to the mass via the first end region or clamping region (2.1.1) thereof and to said concentrically mounted support unit (11) via the second end region or clamping region (2.1.1) thereof, and
(v) the device for changing the predetermined stiffness of the leaf spring arrangements (2) comprises a mechanically, hydraulically, pneumatically, or electrically operated, concentrically mounted rotation device (14 - 18) with the aid of which the concentric vibration mass (1) can be twisted (19) relative to the concentrically mounted support unit (11) such that the pre-set deflection (2.1.2) of all leaf spring arrangements (2) arranged in a star shape is changed.

5. Adaptive **torsionally** effective vibration mass damper comprising a machine, a vehicle, or an installation, which is exposed to said disturbing frequencies to be damped, substantially comprising
(i) a vibration mass (34),
(ii) at least one leaf spring arrangement (2), capable of vibrating under force flow and having one or more leaf springs (2.1), of predetermined stiffness and a free spring length (2.1.5), which is rigidly connected directly or indirectly to a support unit (30) of said machine or installation and directly or indirectly to the vibration mass (34) and has opposite first and second end regions or clamping regions (2.1.1) offset from each other such that there is a defined pre-set deflection (2.1.2), and
(iii) a device for changing the predetermined stiffness of the leaf spring arrangement (2) and thus for adjusting the frequency of the vibration system to the disturbance frequencies, wherein the device is connected to both the leaf spring arrangement (2) and the support device (11)(30) of the vibration system,
**characterized in that**
(iv) the vibration mass (34) is arranged annularly around the concentrically mounted support unit of the machine (30) which carries out circular vibrations when excited, and the annular vibration mass (34) consists of at least two or three circular segments which are connected by a corresponding number of leaf spring arrangements (2) pre-bent in the force-free state which comprise one or more individual leaf springs (2.1) stacked on top of each other, wherein said leaf spring arrangements (2) are arranged tangentially with respect to the longitudinal axis thereof such that they have a damping effect during rotational vibrations of the support unit of the machine (30), and
(v) the device for changing the predetermined stiffness of the leaf spring arrangements (2) comprises a mechanically, hydraulically, pneumatically, or electrically operated displacement apparatus (5)(6) which is arranged on the support unit (30) above or below the vibration mass (34) and the leaf spring arrangements (2) such that it causes a reversible bending of the pre-bent leaf spring arrangement in a direction (2.1.6) perpendicular to the longitudinal axis of the leaf spring arrangement and thus, depending on the direction of the displacement caused by the device, an increase or decrease of the pre-set deflection (2.1.2) of the pre-bent leaf spring arrangement.

6. Adaptive vibration mass damper according to any of claims 2 - 5, **characterized in that** the leaf springs (2.1) of the leaf spring arrangements (2) are pre-bent in an S-shape in the central region symmetrically about their transverse axis in the force-free state and have a deflection (2.1.2) of 15-30% of the free spring length (2.1.5) in the direction of the longitudinal axis of the leaf springs or of the leaf spring arrangement, wherein the longitudinal axis of the leaf springs or of the leaf spring arrangement corresponds to the direction (2.1.3) of the force or load applied during operation.

7. Adaptive vibration mass damper according to any of claims 1 - 6, **characterized in that** the free spring length (2.1.5) is 50 - 500 mm, preferably 100 - 300 mm, depending on the machine, the vehicle, or the installation.

8. Adaptive vibration mass damper according to any of claims 1 - 7, **characterized in that** the leaf spring arrangements (2) comprise at least two, three, four, five, or six leaf springs (2.1) which are stacked on top of each other at a distance from each other of ≤ 2 mm or lie directly on top of each other.

9. Adaptive vibration mass damper according to claim 8, **characterized in that** the stacked leaf springs (2.1) of the leaf spring arrangement (2) are separated from each other by elastic layers with a thickness of > 0 and < 2 mm.

10. Adaptive vibration mass damper according to any of claims 1 - 9, **characterized in that** the leaf springs (2.1) of the leaf spring arrangements (2) have a round or oval bore (2.1.4) in the central region in order to influence the dynamic spring natural frequency.

11. Adaptive vibration mass damper according to any of claims 1 - 10, **characterized in that** when force is applied, the ratio of the vibration path of the damping mass to the introduced vibration path of the vibration system to be calmed is > 100 - 400 in the undamped state.

12. Adaptive vibration mass damper according to any of claims 1 - 11, **characterized in that** if the pre-bent leaf spring arrangement (2) is further deflected by 30% of the original deflection (2.1.2) in the direction which increases the stiffness of the leaf spring arrangement under load, the frequency is doubled or tripled depending on the initial stiffness of the leaf spring arrangement.

13. Adaptive vibration mass damper according to any of claims 1 - 11, **characterized in that** if the pre-bent leaf spring arrangement (2) is further deflected by 30% of the original deflection (2.1.2) in the direction which reduces the stiffness of the leaf spring arrangement under load, the frequency is reduced by 20 - 50% depending on the initial stiffness of the leaf spring arrangement.

14. Adaptive vibration mass damper according to any of claims 1 - 13, **characterized in that** it has one or more additional damping elements.

15. Machine, vehicle, or installation, in particular a wind turbine, comprising a vibration mass damper according to any of claims 1 - 14.

## Revendications

1. Amortisseur de vibrations adaptatif à action unidimensionnelle ou bidimensionnelle et adaptable aux fréquences perturbatrices pour un système vibratoire, comprenant une machine, un véhicule ou une installation qui est soumis auxdites fréquences perturbatrices à amortir, comprenant sensiblement
(i) une masse vibrante (1) (34),
(ii) au moins un agencement de ressorts à lames (2) pouvant vibrer sous l'effet d'un flux de force, présentant un ou plusieurs ressorts à lames (2.1), de rigidité prédéfinie et de longueur de ressort libre (2.1.5), lequel agencement est relié fixement, d'une part, directement ou indirectement, à une unité de support (11) (30) de ladite machine ou installation et d'autre part, directement ou indirectement, à la masse vibrante (1) (34), et présente des première et seconde zones d'extrémité ou de serrage (2.1.1) opposées qui sont décalées l'une par rapport à l'autre de telle sorte qu'il en résulte une déviation (2.1.2) définie préréglée, et
(iii) un dispositif permettant de modifier la rigidité prédéfinie de l'agencement de ressorts à lames (2) et permettant ainsi d'adapter la fréquence du système vibratoire aux fréquences perturbatrices, dans lequel le dispositif est en liaison aussi bien avec l'agencement de ressorts à lames (2) qu'avec le dispositif de support (11)(30) du système vibratoire,
**caractérisé en ce que**
(iv) l'au moins un agencement de ressorts à lames (2) comprend un ou plusieurs ressorts à lames (2.1) individuels empilés les uns sur les autres qui sont précourbés en forme de S autour de leur axe transversal de manière symétrique dans la zone centrale et qui, à l'état sans force, présentent une déviation (2.1.2) de 15 à 30 % de la longueur de ressort libre (2.1.5) dans la direction de l'axe longitudinal des ressorts à lames ou de l'agencement de ressorts à lames, dans lequel l'axe longitudinal des ressorts à lames ou de l'agencement de ressorts à lames correspond à la direction (2.1.3) de l'action de la force ou de la charge exercée pendant le fonctionnement, et
(vi) le dispositif permettant de modifier la rigidité prédéfinie comprend un appareil de déplacement (5)(6) ou un appareil de rotation (14-18), dans lequel le dispositif est conçu et disposé de telle sorte que, grâce à lui, il en résulte une flexion réversible de l'agencement de ressorts à lames précourbé dans la direction (2.1.6) perpendiculaire à l'axe longitudinal de l'agencement de ressorts à lames (2) et ainsi, selon la direction du déplacement ou de la rotation par le dispositif, une augmentation ou une diminution de la déviation (2.1.2) préréglée de l'agencement de ressorts à lames précourbé.

2. Amortisseur de vibrations adaptatif à action unidimensionnelle comprenant une machine, un véhicule ou une installation qui est soumis auxdites fréquences de perturbation à amortir, comprenant sensiblement
(i) une masse vibrante (1),
(ii) au moins un agencement de ressorts à lames (2) pouvant vibrer sous l'effet d'un flux de force, présentant un ou plusieurs ressorts à lames (2.1), de rigidité prédéfinie et de longueur de ressort libre (2.1.5), lequel agencement est relié fixement d'une part, directement ou indirectement, à une unité de support (11) (30) de ladite machine ou installation et d'autre part, directement ou indirectement, à la masse vibrante (1), et présente des première et seconde zones d'extrémité ou de serrage (2.1.1) opposées qui sont décalées l'une par rapport à l'autre de telle sorte qu'il en résulte une déviation (2.1.2) définie préréglée, et
(iii) un dispositif permettant de modifier la rigidité prédéfinie de l'agencement de ressorts à lames (2) et permettant ainsi d'adapter la fréquence du système vibratoire aux fréquences perturbatrices, dans lequel le dispositif est en liaison aussi bien avec l'agencement de ressorts à lames (2) qu'avec le dispositif de support (11)(30) du système vibratoire,
**caractérisé en ce que**
(iv) la masse vibrante (1) est formée par une ou plusieurs plaques mises ensemble et est délimitée latéralement en des points opposés par au moins deux agencements de ressorts à lames (2) disposés parallèlement et précourbés à l'état sans force, lesquels comprennent un ou plusieurs ressorts à lames (2.1) individuels empilés les uns sur les autres et sont reliés de manière fixe respectivement par la première zone d'extrémité ou de serrage (2.1.1) à la masse vibrante (1) et par la seconde zone d'extrémité ou de serrage (2.1.1) à l'unité de support (11), dans lequel la masse vibrante peut vibrer dans une direction (9) qui correspond à l'axe longitudinal ou à la direction de charge (2.1.3) des agencements de ressorts à lames (2), et
(v) le dispositif permettant de modifier la rigidité prédéfinie de l'agencement de ressorts à lames (2) est un appareil de déplacement (5)/6) mécanique, hydraulique, pneumatique ou électrique qui est disposé sur l'unité de support (11) au-dessus ou au-dessous de la masse vibrante (1) et des agencements de ressorts à lames (2) de telle sorte que, grâce à lui, il en résulte une flexion réversible de l'agencement de ressorts à lames précourbé dans la direction (2.1.6) perpendiculaire à l'axe longitudinal de l'agencement de ressorts à lames et ainsi, selon la direction de déplacement par le dispositif, une augmentation ou une diminution de la déviation (2.1.2) préréglée de l'agencement de ressorts à lames précourbé.

3. Amortisseur de vibrations adaptatif à action unidimensionnelle selon la revendication 2, **caractérisé en ce que** la masse vibrante (1) est guidée et maintenue par des ressorts de direction (3)(4) parallèlement à la direction de déplacement (8) lors de son mouvement dans une direction de déplacement (8) provoqué par la déviation modifiée des agencements de ressorts à lames (2).

4. Amortisseur de vibrations adaptatif à action bidimensionnelle comprenant une machine, un véhicule ou une installation qui est soumis auxdites fréquences de perturbation à amortir, comprenant sensiblement
(i) une masse vibrante (1),
(ii) au moins un agencement de ressorts à lames (2) pouvant vibrer sous l'effet d'un flux de force, présentant un ou plusieurs ressorts à lames (2.1), de rigidité prédéfinie et de longueur de ressort libre (2.1.5), lequel agencement est relié fixement d'une part, directement ou indirectement, à une unité de support (11) (30) de ladite machine ou installation et d'autre part, directement ou indirectement, à la masse vibrante (1), et présente des première et seconde zones d'extrémité ou de serrage (2.1.1) opposées qui sont décalées l'une par rapport à l'autre de telle sorte qu'il en résulte une déviation (2.1.2) définie préréglée,
(iii) un dispositif permettant de modifier la rigidité prédéfinie de l'agencement de ressorts à lames (2) et permettant ainsi d'adapter la fréquence du système vibratoire aux fréquences perturbatrices, dans lequel le dispositif est en liaison aussi bien avec l'agencement de ressorts à lames (2) qu'avec le dispositif de support (11)(30) du système vibratoire,
**caractérisé en ce que**
(iv) la masse vibrante (1) est disposée en anneau autour de l'unité de support (11) montée de manière concentrique de telle sorte que ladite masse vibrante peut vibrer dans un plan radial par rapport à l'unité de support, et est reliée à celle-ci par l'intermédiaire de trois à huit agencements de ressorts à lames (2) précourbés à l'état sans force, lesquels agencements comprennent un ou plusieurs ressorts à lames (2.1) individuels empilés les uns sur les autres et sont disposés en étoile à l'intérieur de l'anneau de masse avec un angle d'écartement choisi, identique ou différent, les uns par rapport aux autres, et sont reliés à la masse par l'intermédiaire de leur première zone d'extrémité ou de serrage (2.1.1) et à ladite unité de support (11) montée de manière concentrique par l'intermédiaire de leur seconde zone d'extrémité ou de serrage (2.1.1), et
(v) le dispositif permettant de modifier la rigidité prédéfinie des agencements de ressorts à lames (2) comprend un dispositif de rotation (14 - 18) monté de manière concentrique et fonctionnant de manière mécanique, hydraulique, pneumatique ou électrique, à l'aide duquel une rotation (19) de la masse vibrante (1) concentrique peut être effectuée par rapport à l'unité de support (11) montée de manière concentrique, de sorte qu'une modification de la déviation (2.1.2) préréglée de tous les agencements de ressorts à lames (2) disposés en étoile est obtenue.

5. Amortisseur de vibrations adaptatif à action de torsion comprenant une machine, un véhicule ou une installation qui est soumis auxdites fréquences de perturbation à amortir, comprenant sensiblement
(i) une masse vibrante (34),
(ii) au moins un agencement de ressorts à lames (2) pouvant vibrer sous l'effet d'un flux de force, présentant un ou plusieurs ressorts à lames (2.1), de rigidité prédéfinie et d'une longueur de ressort libre (2.1.5), lequel agencement est relié fixement d'une part, directement ou indirectement, à une unité de support (30) de ladite machine ou installation et d'autre part, directement ou indirectement, à la masse vibrante (34), et présente des première et seconde zones d'extrémité ou de serrage (2.1.1) opposées qui sont décalées l'une par rapport à l'autre de telle sorte qu'il en résulte une déviation (2.1.2) définie préréglée, et
(iii) un dispositif permettant de modifier la rigidité prédéfinie de l'agencement de ressorts à lames (2) et permettant ainsi d'adapter la fréquence du système vibratoire aux fréquences perturbatrices, dans lequel le dispositif est en liaison aussi bien avec l'agencement de ressorts à lames (2) qu'avec le dispositif de support (11)(30) du système vibratoire,
**caractérisé en ce que**
(iv) la masse vibrante (34) est disposée en forme d'anneau autour de l'unité de support montée de manière concentrique de la machine (30), laquelle masse vibrante, lorsqu'elle est excitée, exécute des vibrations circulaires, et la masse vibrante (34) annulaire est constituée d'au moins deux ou trois segments de cercle qui sont reliés par un nombre correspondant d'agencements de ressorts à lames (2) précourbés à l'état sans force, lesquels agencements comprennent un ou plusieurs ressorts à lames (2.1) individuels empilés les uns sur les autres, dans lequel lesdits agencements de ressorts à lames (2) sont disposés tangentiellement par rapport à leur axe longitudinal de telle sorte qu'ils ont un effet amortissant lors de vibrations de rotation de l'unité de support de la machine (30), et
(v) le dispositif permettant de modifier la rigidité prédéfinie des agencements de ressorts à lames (2) comprend un appareil de déplacement (5)(6) fonctionnant de manière mécanique, hydraulique, pneumatique ou électrique, lequel appareil est disposé sur l'unité de support (30) au-dessus ou au-dessous de la masse vibrante (34) et des agencements de ressorts à lames (2) de telle sorte que, grâce à lui, il en résulte une flexion réversible de l'agencement de ressorts à lames précourbé dans la direction (2.1.6) perpendiculaire à l'axe longitudinal de l'agencement de ressorts à lames et ainsi, selon la direction du déplacement par le dispositif, une augmentation ou une diminution de la déviation (2.1.2) préréglée de l'agencement de ressorts à lames précourbé.

6. Amortisseur de vibrations adaptatif selon l'une des revendications 2 à 5, **caractérisé en ce que** les ressorts à lames (2.1) des agencements de ressorts à lames (2) sont précourbés en forme de S autour de leur axe transversal à l'état sans force de manière symétrique dans la zone centrale et présentent une déviation (2.1.2) de 15 à 30 % de la longueur de ressort libre (2.1.5) dans la direction de l'axe longitudinal des ressorts à lames ou de l'agencement de ressorts à lames, dans lequel l'axe longitudinal des ressorts à lames ou de l'agencement de ressorts à lames correspond à la direction (2.1.3) de l'action de la force ou de la charge se produisant pendant le fonctionnement.

7. Amortisseur de vibrations adaptatif selon l'une des revendications 1 à 6, **caractérisé en ce que** la longueur de ressort libre (2.1.5) va de 50 à 500 mm, de préférence de 100 à 300 mm, selon la machine, le véhicule ou l'installation.

8. Amortisseur de vibrations adaptatif selon l'une des revendications 1 à 7, **caractérisé en ce que** les agencements de ressorts à lames (2) comprennent au moins deux, trois, quatre, cinq ou six ressorts à lames (2.1) qui sont empilés les uns sur les autres à une distance les uns des autres ≤ 2 mm ou qui sont directement superposés.

9. Amortisseur de vibrations adaptatif selon la revendication 8,
**caractérisé en ce que** les ressorts à lames (2.1) empilés de l'agencement de ressorts à lames (2) sont séparés les uns des autres par des couches élastiques d'une épaisseur > 0 et < 2 mm.

10. Amortisseur de vibrations adaptatif selon l'une des revendications 1 à 9, **caractérisé en ce que** les ressorts à lames (2.1) des agencements de ressorts à lames (2) présentent un alésage (2.1.4) rond ou ovale dans la zone centrale pour influencer la fréquence propre dynamique des ressorts.

11. Amortisseur de vibrations adaptatif selon l'une des revendications 1 à 10, **caractérisé en ce que**, sous l'action d'une force, le rapport de la course de vibration de la masse d'amortissement à la course de vibration induite du système vibratoire à calmer est > 100 à 400 à l'état non amorti.

12. Amortisseur de vibrations adaptatif selon l'une des revendications 1 à 11, **caractérisé en ce que**, en cas de déviation supplémentaire de l'agencement de ressorts à lames (2) précourbé de 30 % de la déviation (2.1.2) initiale dans la direction qui augmente la rigidité de l'agencement de ressorts à lames en cas de charge, une augmentation double à triple de la fréquence est obtenue en fonction de la rigidité initiale de l'agencement de ressorts à lames.

13. Amortisseur de vibrations adaptatif selon l'une des revendications 1 à 11, **caractérisé en ce que**, en cas de déviation supplémentaire de l'agencement de ressorts à lames (2) précourbé de 30 % de la déviation (2.1.2) initiale dans la direction qui réduit la rigidité de l'agencement de ressorts à lames en cas de charge, une réduction de la fréquence de 20 à 50 % est obtenue en fonction de la rigidité initiale de l'agencement de ressorts à lames.

14. Amortisseur de vibrations adaptatif selon l'une des revendications 1 à 13, **caractérisé en ce qu'**il présente un ou plusieurs éléments d'amortissement supplémentaires.

15. Machine, véhicule ou installation, en particulier éolienne, comprenant un amortisseur de vibrations selon l'une des revendications 1 à 14.
